# EUROPEAN PATENT APPLICATION

(11) **EP 3 101 593 A1**
(43) Date of publication of application: **07.12.2016**
(21) Application number: 16172807.6
(22) Date of filing: 03.06.2016
(51) Int. Cl.: G06K 9/00

(54) **PARKING ASSIST METHOD AND SYSTEM**

(30) Priority: 04.06.2015 GB 201509711
(71) Applicant: Ford Global Technologies, LLC, Dearborn, MI 48126 (US)
(72) Inventor: UPPAL, Vaibhav, Basildon, Essex SS15 5EG (GB)
(74) Representative: Giles, Ashley Simon

(57) **Abstract**

A method (200) for determining if a vehicle (201) will fit in a space (203), the method (200) comprising: capturing an image (217) of the space (203) into which the vehicle (201) is to be moved; simulating a three-dimensional representation of the space (203) from the image (217); determining the dimensions of the space (203) using the three-dimensional representation; comparing the dimensions of the space (203) to the dimensions of the vehicle (201) with one or more doors (205, 207, 209) of the vehicle (201) fully open; and indicating to a user if the dimensions of the vehicle (201) with one or more doors (205, 207, 209) of the vehicle (201) fully open are greater or smaller than the space (203).

## Description

This disclosure relates to a method for determining if a vehicle will fit into a space.

### Introduction

A driver of a vehicle is often faced with the task of manoeuvring the vehicle into a particular parking space. One way of assisting the driver whilst parking is to install parking sensors, for example proximity sensors, to the vehicle that are configured to warn the driver of their vehicle's proximity to other vehicles and/or obstacles whilst manoeuvring their vehicle.

Current technologies focus on the automated parking of a vehicle, which allow the vehicle to be parked with little or no input from the driver. Typically, an automated parking assist system for the vehicle is configured to assess the size of the space in which the vehicle is to be parked. If the system determines that the vehicle will fit into the space, the vehicle can be manoeuvred automatically into and out of the space. Such systems are becoming increasingly popular as they enable the driver to perform parallel, perpendicular and/or angle parking.

Fully automated parking assist system allow the driver to exit the vehicle before the vehicle is parked. Such systems allow the vehicle to be parked in particularly tight parking spaces.

Whilst automated parking assist systems allow the vehicle to be parked quickly and efficiently, it is desirable in certain situations to park the vehicle so that access into and out of the vehicle is not impeded by another vehicle or obstacle, and to assess the ease of loading and unloading items to and from the vehicle.

### Statements of Invention

According to an aspect of the present disclosure there is provided a method for determining if a vehicle will fit in a parking space, for example determining if the vehicle will fit in the space with one or more doors of the vehicle fully open. The method comprises capturing an image of the space into which the vehicle is to be moved. The image may be captured using one or more imaging devices, for example a camera. The method comprises simulating a three-dimensional representation of the space from the image. The three-dimensional representation of the space may be simulated from the image using a computing device operatively connected to the imaging device, for example a portable computing device or a computing device of the vehicle. The three three-dimensional representation of the space may be simulated using an augmented reality system.

The method comprises determining the dimensions of the space using the three-dimensional representation, for example determining the maximum and/or minimum width, length and/or height of the space. The method comprises specifying the one or more doors of the vehicle which are to be opened. For example, a user may specify a first configuration of the vehicle with a first door open, a second configuration of the vehicle with a second door open, and/or any other appropriate configuration. The configurations of the vehicle may be stored on the computing device. The method comprises comparing the dimensions of the space to the dimensions of the vehicle with the specified one or more doors of the vehicle fully open. The dimensions of the vehicle, for example the dimensions of the vehicle in a number of different configurations, may be stored on the computing device. The method comprises indicating if the dimensions of the vehicle with the specified one or more doors of the vehicle fully open are greater or smaller than the space. In this manner, a driver of the vehicle, or any other user, may assess whether or not the parking space is suitable for a particular scenario, for example loading an item into and/or of the vehicle once the vehicle is parked in the space.

The imaging device may be a stereo camera, for example a camera having two lenses with a separate image sensor for each lens, thereby allowing the camera to capture three-dimensional images. The stereo camera may be fitted to the vehicle. The imaging device may comprise one or more parking sensors of the vehicle, for example ultrasonic sensors and/or electromagnetic sensors. The imaging device may be installed on the vehicle, for example the imaging device may comprise one or more parking assist cameras and/or sensors of the vehicle. The imaging device and the computing device may be housed in a common housing.

The computing device may be operatively connected to the imaging device, for example by virtue of one or more electrical connections and/or wireless connections. The computing device may be the processor of a smartphone, tablet computer or laptop. The computing device may be installed on the vehicle, for example the computing device may be an electronic control unit of the vehicle. The imaging device and/or the computing device may be operatively connected to another computing device that is located remotely, for example the other computing device may be a remote server of the manufacturer of the vehicle. The method may further comprise transmitting the image and/or the three-dimensional representation of the space to the remote computing device. The computing device and/or the remote computing device may be configured to store and/or analyse data regarding the locations, for example types of parking spaces, in which a driver of the vehicle may wish to park the vehicle.

The computing device may be operatively connected to a display system of the vehicle. The display system may comprise one or more screens, for example one or more screens in the dashboard of the vehicle.

The method may further comprise indicating if the dimensions of the vehicle with the specified one or more doors of the vehicle fully open are greater or smaller than the space by overlaying a scaled image of the vehicle onto the image, for example using an augmented reality system.

The method may comprise indicating the amount by which the vehicle with the specified one or more doors of the vehicle fully open is greater or smaller than the three-dimensional representation of the space.

The method may comprise indicating the amount by which the specified one or more doors may open before contacting an adjacent vehicle and/or obstacle, for example if the dimensions of the vehicle with one or more doors of the vehicle fully open are greater than the space.

The method may comprise selecting a type of vehicle. For example, if the dimensions of the vehicle with the specified one or more doors of the vehicle fully open are greater than the space, a user may select one or more other vehicles. The method may comprise comparing the dimensions of the space to the dimensions to the one or more other vehicles with the specified one or more doors fully open. In this manner, the user may select one or more vehicles that will fit in the space with the specified one or more doors of the vehicle fully open.

The method may comprise comparing the dimensions of the vehicle with the specified one or more doors of the vehicle fully open with the dimensions of one or more predetermined spaces. The one or more predetermined spaces may be preferred spaces, for example a parking space at the home of the user or the place of work of the user. The predetermined spaces may be stored on the computing device.

The method may comprise indicating to the user if the vehicle will fit into the space only if the vehicle is in a certain orientation and/or position. For example, the method may comprise indicating to the user that the vehicle will only fit into the space if it is in a first orientation, for example where the vehicle is facing forwards in the space, and/or one or more other orientations. The method may comprise indicating to the user that the vehicle will only fit into the space if it is in a first position within the space, for example a position where the vehicle is positioned towards one side of the space, and/or one or more other positions. For example, the user may specify that they wish to open the driver's door of the vehicle. The method may comprise indicating to the user that the vehicle with the specified door fully open, e.g. the driver's door, will fit into the space only when the vehicle is positioned to one side of the space. In a similar manner, the driver may specify that they wish to open the trunk of the vehicle and the driver's door of the vehicle. In such a scenario, the driver has indicated a desire to access both of the driver's door and the trunk of the vehicle. As such, the method may comprise indicating an orientation and/or position of the vehicle in which the driver can access the specified one or more fully open doors when the vehicle is in the space.

The method may comprising parking the vehicle using an automatic parking system of the vehicle. The automatic parking system may be activated to park the vehicle in the space so that the driver can fully open the specified one or more doors of the vehicle.

The method may comprise indicating to the user that the vehicle will not fit into the space if the vehicle is in the first orientation, for example owing to a minimum width between the other vehicles, and/or one or more local minima widths. The method may comprise indicating to the user that the vehicle will fit into the space in the second orientation, or any other appropriate orientation.

According to another aspect of the present disclosure there is provided a system for determining if a vehicle will fit in a space. The system comprises an imaging device configured to capture an image of the space into which the vehicle is to be moved. The system comprises a computing device operatively connected to the imaging device. The computing device is configured to simulate a three-dimensional representation of the space from the image. The computing device is configured to determine the dimensions of the space using the three-dimensional representation. The computing device is configured to allow a user to specify one or more doors of the vehicle which are to be opened. The computing device is configured to compare the dimensions of the space to the dimensions of the vehicle with the specified one or more doors of the vehicle fully open. The computing device is configured to provide an indication to a user that the dimensions of the vehicle with the specified one or more doors of the vehicle fully open are greater or smaller than the three-dimensional representation of the space.

A vehicle may be provided comprising one or more of the above-mentioned systems.

The invention also provides software, such as a computer program or a computer program product for carrying out any of the methods described herein, and a computer readable medium having stored thereon a program for carrying out any of the methods described herein. A computer program embodying the disclosure may be stored on a computer-readable medium, or it could, for example, be in the form of a signal such as a downloadable data signal provided from an Internet website, or it could be in any other form.

To avoid unnecessary duplication of effort and repetition of text in the specification, certain features are described in relation to only one or several aspects or arrangements of the disclosure. However, it is to be understood that, where it is technically possible, features described in relation to any aspect or arrangement of the disclosure may also be used with any other aspect or arrangement of the disclosure.

### Brief Description of the Drawings

For a better understanding of the present disclosure, and to show more clearly how it may be carried into effect, reference will now be made, by way of example, to the accompanying drawings, in which:
Figure 1 shows a vehicle with its doors open parked between two other vehicles;
Figure 2 shows a method for determining if the vehicle will fit into the parking space; and
Figure 3 shows a parking space in a parking garage and an image of the parking space overlaid with an image of a vehicle with its doors open.

### Detailed Description

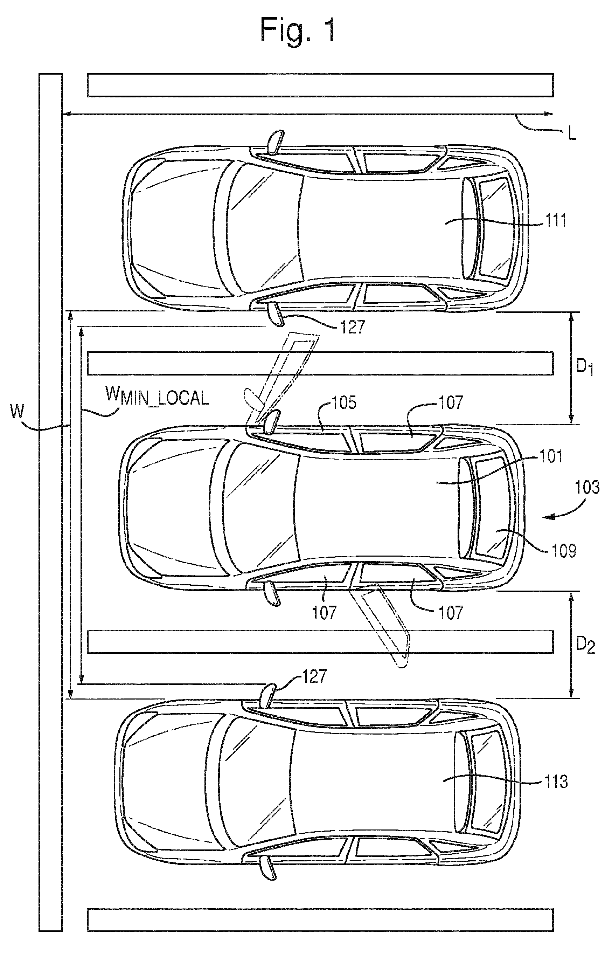

Figure 1 shows a vehicle 101 parked in a parking space 103 located between two other vehicles 111, 113. In the arrangement shown in figure 1, the parking space 103 is a perpendicular parking space. However, the parking space 103 may be any appropriate type of parking space 103. For example, the parking space 103 may be a parallel parking space or an angled parking space.

The parking space 103 may be adjacent to one or more structures/objects, for example one or more other vehicles, walls, bollards, pillars and/or any other obstacle that may hinder access into and/or out of the vehicle 101 when the vehicle 101 is parked in the space 103. In the arrangement shown in figure 1, the vehicle 101 is parked in between the two other vehicles 111, 113, each of which may obstruct access into and/or out of the vehicle 101. For example, the parking space 103 may be sufficiently large for the vehicle 101 to fit into, but not large enough to open one or more doors of the vehicle 101 to allow sufficient access into and/or out of the vehicle 101. Access into and/or out of the vehicle 101 may be by virtue of a dedicated access opening, such as a driver's door 105, one or more passenger doors 107, and/or a tail gate 109 of the vehicle 101. A passenger door 107 may be a kerbside door, which is located on a different side of the vehicle to the driver's door 105, or any other door of the vehicle, for example another door of the vehicle located on the same side of the vehicle as the driver's door 105. Whilst the present disclosure refers to the layout of a UK vehicle 101, i.e. with the driver's door 105 on the right hand side of the vehicle 101, it is understood that the present disclosure may apply equally to any configuration of vehicle 101, for example to a vehicle configured for use in the US or Continental Europe, with the driver's door 105 on the left hand side of the vehicle 101.

In the arrangement shown in figure 1, the vehicle 101 is a car. However, in another arrangement, the vehicle 101 may be any other type of vehicle, for example a van, a truck, an articulated lorry, a caravan, a trailer, a marine vessel or an aircraft. As such, the vehicle access opening may be closed by any type of hatch or door fitted to the vehicle.

In the arrangement shown in figure 1, the parking space 103 has a width W between the two other vehicles 111, 113. When the vehicle 101 is in the parking space 103, the vehicle 101 has a clearance D1 on one side between the vehicle 101 and one of the other vehicles 111, and another clearance D2 on the other side between the vehicle 101 and the other vehicle 113. In certain circumstances, it is desirable for the clearance D1 and/or D2 to be sufficient such that at least one of the doors 105, 107 of the vehicle 101 may be opened to its full extent, for example when loading items, such as a wheelchair or a pushchair, into the vehicle 101, and/or if one or more occupants of the vehicle 101 has decreased mobility.

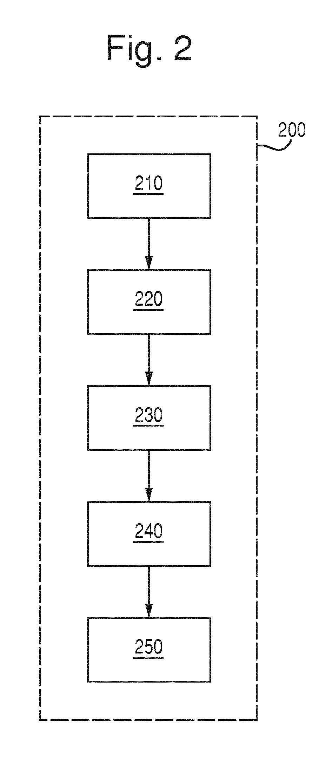

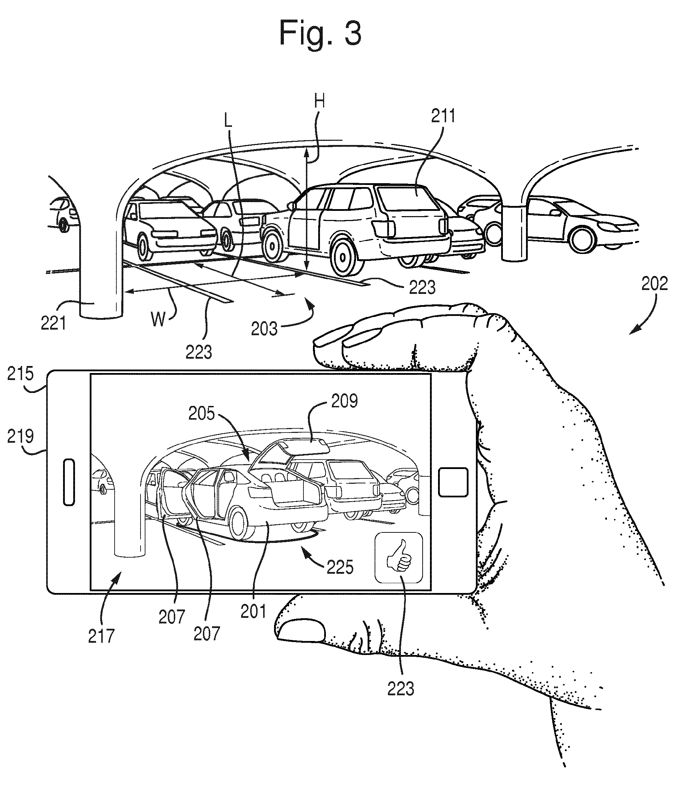

The present disclosure provides a method 200 for determining if the vehicle 201 will fit into the space 203 when one or more doors 205, 207, 209 of the vehicle 201 are fully open. Figure 2 shows the method 200 and figure 3 illustrates a system 202 for determining if the vehicle 201 will fit into the space 203. In the arrangement illustrated in figure 3, the parking space 203 is in a car park, and has a vehicle 211 to the right of the parking space 203, another vehicle 213 in front of the parking space 203 and a pillar 221 to the left of the parking space 203.

The method 200 comprises the step 210 of capturing an image 217 of the space 203 into which the vehicle 201 is to be moved. In the arrangement shown in figure 3, the image 217 is taken using an imaging device 215, for example a smartphone 219 that has a camera. In the arrangement shown in figure 3, the image 217 is captured using a camera of the smartphone 219. However, the image 217 may be captured using any type of imaging device 215 configured to capture the image 217 of the parking space 203.

The smartphone 219 shown in figure 3 may be configured to capture the image 217 and perform analysis of the image 217. For example, the smartphone 209 may comprise one or more computing devices that are operatively connected to the camera. The smartphone 219 may be configured to run one or more applications that provide a graphical user interface (GUI) by virtue of a screen, which enables a user, for example a driver of the vehicle 201, to operate the camera and make appropriate selections regarding the configuration of the vehicle 201. For example, the application may be configured to allow the user to select the type of vehicle, i.e. the make and/or the model of the vehicle, and/or select which doors of the vehicle 201 are to be opened fully.

The imaging device 215 may be a separate device, for example a standalone digital camera that is operatively connected to a separate computing device configured to carry out one or more appropriate processing techniques. For example, the imaging device may be a parking assist camera, which is installed on the vehicle 203 and is operatively connected to one or more computing devices of the vehicle 203. The vehicle 201 may comprise one or more screens that are able to display the GUI in a similar manner to the smartphone 219.

In one arrangement, the imaging device 215 may be operatively connected to a remote computing device, for example a remote server of the manufacturer of the vehicle 203. The remote computing device may be configured to receive the image 217 captured by the imaging device 215, process the image, and transmit data to the operator of the imaging device 215. In such an arrangement, the vehicle manufacturer is able to obtain data about the locations in which their customers may wish to park a particular vehicle. Such data may be used to influence design decisions, for example decisions about the size and shape of a vehicle, such that it fits in a larger number of parking spaces.

The method 200 comprises the step 220 of simulating a three-dimensional (3D) representation of the space 203 from the image 217. The 3D representation may be simulated using one or more image processing techniques performed by the computing device. For example, an augmented reality (AR) process may be used to create the 3D representation of the space 203. In such an example, an AR marker may be placed in the field of vision of the imaging device 215 so that the AR system can create an accurate representation of the space 203 when the computing device processes the image 217. The AR marker may, for example, be a predefined AR marker, and/or a reference object of known dimensions, such as the lines 223 of the parking space 203 and/or a car key, placed in or near the parking space 203, or anywhere in the field of vision of the imaging device 215.

Additionally or alternatively, the 3D representation may be simulated using stereo photography. In such an example, the imagining device 215 may be a stereo camera, which is mounted in a fender of the vehicle 201 for example. In this manner, the stereo camera may be used as a standard parking assist camera and may also be configured to capture a stereo image of the parking space 203. The computing device may then process the captured image 217 to simulate the 3D representation of the parking space 203.

The method 200 comprises the step 230 of determining at least one dimension of the space 203 using the 3D representation. The step 203 may comprise determining at least one of the width W of the parking space 203, the height H of the parking space 203, and the length L of the parking space 203. In the arrangement shown in figure 3, the width W of the parking space 203 is the distance between the vehicle 211 and the pillar 221, and the height H of the parking space 203 is the distance between the floor and the ceiling of the car park, and the length L of the parking space 203 is the distance between the vehicle 213 and the end of the lines 223 that demark the area of the parking space 203. In this manner, the computing device may use the 3D representation of the parking space 203 to accurately determine the geometry of the parking space 203, for example as a function of the width W, height H and/or length L of the parking space 203.

The method 200 comprises the step 240 of comparing the dimensions of the space 203 to the dimensions of the vehicle 201 with one or more doors of the vehicle 201 fully open. For any particular parking space, the driver of the vehicle 201, or indeed any person wishing to check whether the vehicle 201 will fit into the parking space 203, may specify which doors of the vehicle 201 they want to open once the vehicle 201 is parked in the space 203. For example, the driver of the vehicle 201 may only wish to check that the driver's door 205 of the vehicle 201 may be fully opened so that the driver can easily get into and out of the vehicle 201 once parked. Additionally or alternatively, the driver may wish to check if one or more passenger doors 207 and/or the tailgate 209 of the vehicle 201 may be fully opened once the vehicle 201 is parked in the space 203. The method 200 may comprise, therefore, the step of selecting which doors 205, 207, 209 of the vehicle 201 are to be opened fully.

In the arrangement shown in figure 3, the driver wishes to check if the front and rear kerbside passenger doors 207 of the vehicle 201 will open fully once the vehicle 201 is parked in the space 203 as a result of the location of the pillar 221. The dimensions of the vehicle 201 are therefore set according to the driver's selection of which doors are to be opened fully. The computing device may be configured to store the dimensions of the vehicle 201 in various configurations, for example a first configuration with only the driver's door 205 fully open and a second configuration with the driver's door 205 and the front passenger door 207 fully open, and so on. The dimensions of the vehicle 201 may be input manually into the computing device depending on the configuration of an individual vehicle, for example a vehicle that has been modified and/or for a specific requirement of each parking space 203.

The dimensions of the vehicle 201 with one or more doors 205, 207, 209 fully open therefore depend on which of the doors 205, 207, 209 the driver selects. For example, the dimensions of the vehicle 201 in the first configuration will be smaller than the dimensions of the vehicle 201 in the second configuration. In this manner, the user may select which vehicle configuration to compare to the parking space 203.

The method 200 may comprise comparing the dimensions of the vehicle 201 with one or more doors 205, 207, 209 of the vehicle 201 fully open to a plurality of different parking spaces 203. For example, the user may capture multiple images of different parking spaces into which the vehicle 201 is to be moved. The computing device may be configured to store data on the plurality of different parking spaces 203, for example preferred parking spaces in a number of different locations. The parking space 203 may, for example, be a garage in which the vehicle is to be kept or a parking space in a public car park.

The method comprises the step 250 of indicating to the user if the dimensions of the vehicle 201 with one or more doors 205, 207, 209 of the vehicle 201 fully open are greater or smaller than the space 203. In the arrangement shown in figure 3, and as stated above, the driver of the vehicle 201 is concerned with checking if the vehicle 201 will fit into the space 203 with the front and rear passenger doors 207 fully open. The GUI is used to provide an indication to the user of whether the vehicle 201, in the chosen configuration, will fit into the selected space 203. One indication may be a simple positive/negative indication, for example an icon 223 on the GUI may indicate if the vehicle 201 will fit in the selected space 203.

The method 200 may also comprise indicating the amount by which the vehicle 201 in the chosen configuration is greater or smaller than the space 203. For example, in the arrangement shown in figure 3, the method 200 may comprise indicating that the vehicle 201 will fit into the space 203 with the front and rear kerbside doors 207 fully open, and the amount by which one or more other doors of the vehicle 201, for example the driver's door 205 and/or the tailgate 209, may be opened. In this manner, the user may assess whether access into and/or out of the vehicle 201 is possible with the vehicle 201 in the chosen configuration. Additional or alternatively, the user may set a requirement that the dimensions of the vehicle 201 are always determined with the driver's door 205 fully open, in addition to whichever other doors 207, 209 are selected by the user.

Where a dimension of the vehicle 201 in the chosen configuration is greater than that of the selected space 203, an indication may be provided to specify the amounts by which the selected doors 205, 207, 209 may be opened, for example in terms of a percentage. The user may then assess whether or not the amounts by which the selected doors 205, 207, 209 may be opened are suitable for a particular situation, for example loading a bulky object, such as a wheelchair or a pushchair, into the vehicle 201.

Where the dimensions of the vehicle 201 in the chosen configuration are smaller than the selected space 203, an indication may be provided to specify the clearance between the edge of the selected door 205, 207, 209 and the adjacent object, for example between the edge of the selected door 205, 207, 209 and the car 211, 213, the pillar 221 and the ceiling of the car park respectively.

The method 200 may comprise overlaying a scaled image 225 of the vehicle 201 in the chosen configuration onto the image 217, for example using an augmented reality system. The arrangement shown in figure 3 illustrates the vehicle 201 overlaid into the parking space 203. The image 225 may be overlaid onto a still image, or may be overlaid onto a real-time video image of the parking space 203. The vehicle 203 may comprise a display system, for example a screen in the dashboard of the vehicle 203, that is operatively connected to the computing device. The display system of the vehicle 203 may be configured to display the image 117, for example in addition to or instead of the smartphone 219 shown in figure 3.

In one arrangement, a prospective customer of a vehicle may wish to check if the vehicle to be purchased will fit inside one or more parking spaces, for example a parking space at the customer's home or work. In this manner, the customer may determine if the selected vehicle to be purchased is suitable. If it is indicated that the selected vehicle does not fit in one or more of the customer's preferred parking spaces, the method 200 may comprise a step of suggesting one or more alternative vehicles.

Referring back to the arrangement shown in figure 1, each of the vehicles are parked substantially parallel to one another such that the width W between the vehicles 111, 113 is generally constant along the length of the vehicles 111, 113. In other arrangements, however, each of the vehicles 111, 113 may be angled towards one another. In such a situation, there may be a maximum width W_{MAX} and a minimum width W_{MIN} in between the vehicles 111, 113. Additionally or alternatively, there may exist one or more local minima widths W_{MIN_LOCAL} in the width W between the vehicles 111, 113, for example where the wing mirrors 127 project from the sides of the vehicles 111, 113.

The method 200 may comprise indicating to the user if the vehicle 201 will fit into the space 203 only if the vehicle is in a certain orientation and/or position, for example a first orientation when the vehicle is facing forwards in the space 203, or a second orientation when the vehicle 201 is facing backwards in the space 203. The user may wish to check if the above-mentioned second configuration of the vehicle, i.e. with the driver's door 205 and the front passenger door 207 fully open, will fit in the space 203. The method 200 may comprise indicating to the user that the vehicle 201 will not fit into the space 203 if the vehicle 201 is in the first orientation, for example owing to a minimum width W_{MIN} between the other vehicles, and/or one or more local minima widths W_{MIN_LOCAL}. The method 200 may comprise indicating to the user that the vehicle 201 will fit into the space in the second orientation, or any other appropriate orientation.

Additional Statements of Invention:
Statement 1. A method for determining if a vehicle will fit in a space, the method comprising:
   capturing an image of the space into which the vehicle is to be moved;
   simulating a three-dimensional representation of the space from the image;
   determining the dimensions of the space using the three-dimensional representation;
   comparing the dimensions of the space to the dimensions of the vehicle with one or more doors of the vehicle fully open; and
   indicating to a user if the dimensions of the vehicle with one or more doors of the vehicle fully open are greater or smaller than the space.
Statement 2. A method according to statement 1, the method further comprising indicating the amount by which the vehicle with one or more doors of the vehicle fully open is greater or smaller than the three-dimensional representation of the space.
Statement 3. A method according to statement 1 or 2, the method further comprising selecting a type of vehicle.
Statement 4. A method according to any of the previous statements, the method further comprising overlaying a scaled image of the vehicle onto the image.
Statement 5. A method according to any of the previous statements, the method further comprising specifying the one or more doors of the vehicle which are to be opened.
Statement 6. A method according to any of the previous statements, the method further comprising comparing the dimensions of the vehicle with one or more doors of the vehicle fully open with the dimensions of one or more predetermined spaces.
Statement 7. A method according to any of the previous statements, the method further comprising transmitting the image and/or the three-dimensional representation of the space to a remote computing device.
Statement 8. A method according to any of the previous statements, wherein the imaging device is a stereo camera.
Statement 9. A method according to statement 8, wherein the stereo camera is fitted to the vehicle.
Statement 10. A system for determining if a vehicle will fit in a space, the system comprising:
   an imaging device configured to capture an image of the space into which the vehicle is to be moved; and
   a computing device operatively connected to the imaging device, the computing device being configured to:
      simulate a three-dimensional representation of the space from the image;
      determine the dimensions of the space using the three-dimensional representation;
      compare the dimensions of the space to the dimensions of the vehicle with one or more doors of the vehicle fully open; and
      provide an indication to a user that the dimensions of the vehicle with one or more doors of the vehicle fully open are greater or smaller than the three-dimensional representation of the space.
Statement 11. A system according to statement 10, wherein the computing device is operatively connected to a display system of the vehicle.
Statement 12. A system according to statement 10 or 11, wherein the computing device is operatively connected to another computing device that is located remotely.
Statement 13. A vehicle comprising one or more systems of any of statements 10 to 12.
Statement 14. Software which when executed by a computing apparatus causes the computing apparatus to perform the method of any of statements 1 to 9.

It will be appreciated by those skilled in the art that although the invention has been described by way of example with reference to one or more arrangements, it is not limited to the disclosed arrangements and alternative arrangements could be constructed without departing from the scope of the invention as defined by the appended claims.

## Claims

1. A method for determining if a vehicle will fit in a space, the method comprising:
capturing an image of the space into which the vehicle is to be moved;
simulating a three-dimensional representation of the space from the image;
determining the dimensions of the space using the three-dimensional representation;
specifying one or more doors of the vehicle which are to be opened;
comparing the dimensions of the space to the dimensions of the vehicle with the specified one or more doors of the vehicle fully open; and
indicating to a user if the dimensions of the vehicle with the specified one or more doors of the vehicle fully open are greater or smaller than the space.

2. A method according to claim 1, the method further comprising indicating the amount by which the vehicle with the specified one or more doors of the vehicle fully open is greater or smaller than the three-dimensional representation of the space.

3. A method according to claim 1 or 2, the method further comprising selecting a type of vehicle.

4. A method according to any of the previous claims, the method further comprising overlaying a scaled image of the vehicle onto the image.

5. A method according to any of the previous claims, the method further comprising indicating to the user that the vehicle will fit into the space only when the vehicle is in a certain orientation and/or position.

6. A method according to any of the previous claims, the method further comprising comparing the dimensions of the vehicle with the specified one or more doors of the vehicle fully open with the dimensions of one or more predetermined spaces.

7. A method according to any of the previous claims, the method further comprising transmitting the image and/or the three-dimensional representation of the space to a remote computing device.

8. A method according to any of the previous claims, the method further comprising using an automatic parking system of the vehicle to park the vehicle in the space so that the driver can fully open the specified one or more doors of the vehicle.

9. A system for determining if a vehicle will fit in a space, the system comprising:
an imaging device configured to capture an image of the space into which the vehicle is to be moved; and
a computing device operatively connected to the imaging device, the computing device being configured to:
simulate a three-dimensional representation of the space from the image;
determine the dimensions of the space using the three-dimensional representation;
allow a user to specify one or more doors of the vehicle which are to be opened;
compare the dimensions of the space to the dimensions of the vehicle with the specified one or more doors of the vehicle fully open; and
provide an indication to the user that the dimensions of the vehicle with the specified one or more doors of the vehicle fully open are greater or smaller than the three-dimensional representation of the space.

10. A system according to claim 9, wherein the computing device is operatively connected to a display system of the vehicle.

11. A system according to claim 9 or 10, wherein the computing device is operatively connected to another computing device that is located remotely.

12. A system according to any of claims 9 to 11, wherein the imaging device is a stereo camera.

13. A system according to any of claims 9 to 12, wherein the stereo camera is fitted to the vehicle.

14. A vehicle comprising one or more systems of any of claims 9 to 13.

15. Software which when executed by a computing apparatus causes the computing apparatus to perform the method of any of claims 1 to 8.
